# EUROPEAN PATENT APPLICATION

(11) **EP 4 169 658 A1**
(43) Date of publication of application: **26.04.2023**
(21) Application number: 21828171.5
(22) Date of filing: 10.05.2021
(51) Int. Cl.: B23K 26/382, B23K 26/70

(54) **LASER MACHINING TOOL AND WORKPIECE MACHINING METHOD**

(30) Priority: 23.06.2020 JP 2020107510
(71) Applicant: Murata Machinery, Ltd., Kyoto-shi, Kyoto 601-8326 (JP)
(72) Inventor: MATSUMURA, Kohei, Inuyama-shi, Aichi 484-8502 (JP)
(74) Representative: Stöckeler, Ferdinand
(86) International application number: PCT/JP2021/017716
(87) International publication number: WO 2021/261095

(57) **Abstract**

[Problem] To reliably force out slag remaining in a hole without damaging protrusions of a table.

[Means to Solve Problem] Provided is a laser machining tool that performs laser machining on a plate-shaped workpiece, comprising: a table that has a plurality of protrusions and that supports the workpiece on upper ends of the protrusions; a laser head that performs boring machining by irradiating a laser beam along an outline of a hole to be formed in the workpiece on the table; a transporter that transports the workpiece that has undergone laser machining; and a rod-shaped tool that forces out slag remaining in the hole. The workpiece is transported by means of the transporter until the hole formed by the boring machining is arranged at a processing position having a discharge space for the slag, outside and below the table as seen in a plan view, and the slag remaining in the hole is forced out by means of the rod-shaped tool, at the processing position.

## Description

### Technical Field

The present invention relates to a laser machining tool and a workpiece machining method.

### Background Art

A laser machining tool is capable of performing, on a plate-shaped workpiece, shape forming or boring machining to form a hole as a pilot hole for tapping machining. Boring machining is a process in which, in a state where a table having a plurality of protrusions supports a plate-shaped workpiece thereon, a laser head irradiates a laser beam along the outline of a hole to be formed in the workpiece. Slag S usually falls off a workpiece W to be removed. However, in some cases, slag, which is supposed to fall off, may be obstructed and kept from falling off by a protrusion, and may get caught in the hole and not fall off. Also, in those cases where a cutting defect occurs, slag, which is supposed to fall off, may become adherent to the workpiece and not fall off. A workpiece in the state where slag has not fallen off can cause defective machining, damage to a mold, and damage to a tap when forming or tapping the hole.

Patent Literature 1 discloses that, in a state where a plate-shaped workpiece is supported by a table having a plurality of protrusions, slag remaining in a hole formed as a result of boring machining is forced out by means of a rod-shaped tool.

### Citation List

### Patent Literature

[Patent Literature 1] Japanese Unexamined Patent Application, First Publication No. H04-231192

### Summary of Invention

### Technical Problem

The method disclosed in Patent Literature 1 cannot be applied in those cases where boring machining is performed directly above a protrusion of a table because the protrusion may be damaged by the impact that occurs when slag is forced out.

### Means for Solving Problem

A laser machining tool according to an aspect of the present invention may be a laser machining tool that performs laser machining on a plate-shaped workpiece. The laser machining tool may include a table that has a plurality of protrusions and that supports the workpiece on upper ends of the protrusions. The laser machining tool may include a laser head that performs boring machining by irradiating a laser beam along an outline of a hole to be formed in the workpiece on the table. The laser machining tool may include a transporter that transports the workpiece that has undergone laser machining. The laser machining tool may include a rod-shaped tool that forces out slag remaining in the hole. In the laser machining tool, the workpiece may be transported by means of the transporter until the hole formed by the boring machining is arranged at a processing position having a discharge space for the slag, outside and below the table as seen in a plan view. The laser machining tool may force out the slag remaining in the hole by means of the rod-shaped tool, at the processing position.

A workpiece machining method according to an aspect of the present invention is a method for machining a plate-shaped workpiece by means of laser machining. The workpiece machining method may include supporting the workpiece on upper ends of a plurality of protrusions provided on a table. The workpiece machining method may include performing boring machining by irradiating a laser beam along an outline of a hole to be formed in the workpiece on the table. The workpiece machining method may include transporting the workpiece by means of a transporter until the hole formed by the boring machining is arranged at a processing position having a discharge space for slag, outside and below the table as seen in a plan view. The workpiece machining method may include forcing out the slag remaining in the hole by means of the rod-shaped tool, at the processing position.

### Advantageous Effects of the Invention

The laser machining tool and the workpiece machining method according to an aspect of the present invention are capable of reliably forcing out slag that remains in a hole without damaging protrusions of a table.

The laser machining tool according to an aspect of the present invention may include a secondary machining tool that performs secondary machining on a hole of which slag has been forced out by means of the rod-shaped tool. The laser machining tool according to this aspect can perform secondary machining on a hole of which slag has been forced out.

The laser machining tool according to an aspect of the present invention may select either one of the rod-shaped tool and the secondary machining tool and position it at the processing position. The laser machining tool according to this aspect can force out slag without being interfered by the secondary machining tool and perform secondary machining without being interfered by the rod-shaped tool.

The laser machining tool according to the present invention may include an annular member which is arranged so as to sandwich a workpiece with the rod-shaped tool and into which the rod-shaped tool can be inserted. In the laser machining tool, a plurality of pairs of one unit of the rod-shaped tool and one unit of the annular member may be arranged, and one of the pairs may be selected for use, according to the size of the hole. The laser machining tool according to this aspect can suitably force out slag remaining in a plurality of types of holes having different sizes.

The laser machining tool according to an aspect of the present invention may include a controller that controls operations of the rod-shaped tool. The controller may cause an operation of forcing out slag by means of the rod-shaped tool to be executed, for all of the holes formed in the workpiece. The laser machining tool according to this aspect can reliably force out slag remaining in a hole.

The laser machining tool according to an aspect of the present invention may include a controller that controls operations of the rod-shaped tool. The controller may cause an operation of forcing out slag by means of the rod-shaped tool to be executed, for a hole in the workpiece that is formed directly above the protrusion. The laser machining tool according to this aspect can reduce the amount of time taken to perform the operation of forcing out slag.

The laser machining tool according to an aspect of the present invention may include a controller that controls operations of the rod-shaped tool. The laser machining tool may include an imager that captures an image of a hole formed by boring machining. The controller may determine from the image captured by the imager whether or not slag remains in the hole and cause an operation of forcing out slag by means of the rod-shaped tool to be executed for the hole if slag is determined as remaining in the hole. The laser machining tool according to this aspect can not only reliably force out slag remaining in a hole but also reduce the amount of time taken to perform the operation of forcing out slag.

### Brief Description of the Drawings

Fig. 1 is a diagram showing an example of an external perspective view of a laser machining tool.
Fig. 2 is a diagram showing an example of a configuration of a laser head.
Fig. 3 is a diagram showing an example of an external perspective view of a force-out device.
Fig. 4 is a flowchart showing an example of a procedure for controlling boring machining.
Fig. 5 is a diagram showing an example of a procedure for the boring machining.
Fig. 6 is a diagram showing an example of a procedure for the boring machining.
Fig. 7 is a flowchart showing an example of a procedure for controlling the process of forcing out slag and secondary machining.
Fig. 8 is a diagram showing an example of a procedure for forcing out slag.
Fig. 9 is a diagram showing an example of a procedure for forcing out slag.
Fig. 10 is a reference diagram for describing the diameter of a rod-shaped tool and the diameter of an annular member suitable for forcing out slag.
Fig. 11 is a flowchart showing another example of the procedure for controlling the process of forcing out slag and secondary machining.
Fig. 12 is a flowchart showing another example of the procedure for controlling boring machining.
Fig. 13 is a flowchart showing another example of the procedure for controlling the process of forcing out slag and secondary machining.

### Description of Embodiments

Hereinafter, the present invention will be described through an embodiment of the invention. However, the invention defined in the claims is not limited to the following embodiment, and not all combinations of features described in the embodiment are essential to the means by which the present invention solves the above problems.

Hereunder, an XYZ coordinate system is used to describe directions in the drawings. In the XYZ coordinate system, the vertical direction is taken as the Z direction, and the horizontal directions are taken as the X direction and the Y direction. Also, in each of the X, Y, and Z directions, where appropriate, the side pointed by the arrow is referred to as + side and the opposite side thereof is referred to as - side.

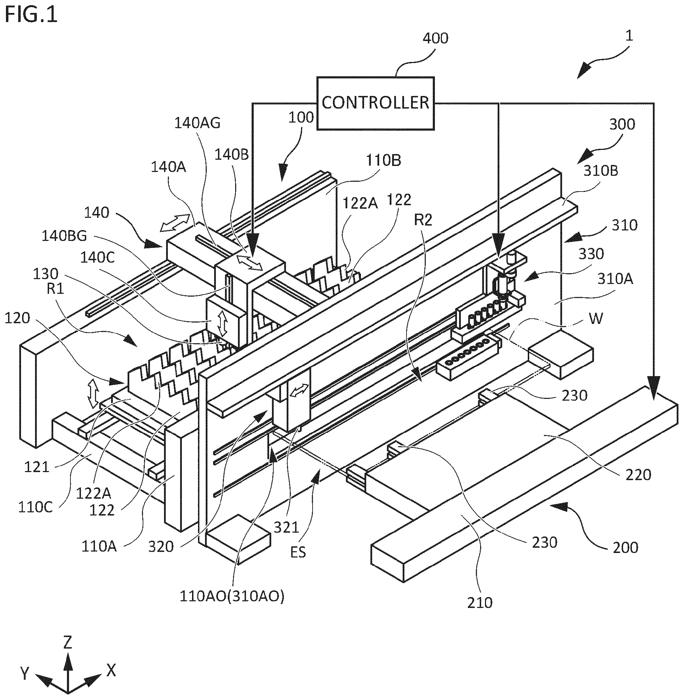

Fig. 1 is a diagram showing an example of an external perspective view of a laser machining tool 1. The laser machining tool 1 is an apparatus that performs laser machining, secondary machining, and slag force-out processing on a plate-shaped workpiece W. The laser machining tool 1 includes a laser machining device 100, a transporter 200, a secondary machining device 300, and a control device 400. The control device 400 includes a laser machining device 100, a transporter 200, and a secondary machining device 300.

The laser machining device 100 is a device that performs laser machining on the workpiece W. The laser machining device 100 includes a frame 110A, a frame 110B, a frame 110C, a table 120, a laser head 130, and a head driver 140.

The laser machining device 100 performs laser machining on the workpiece W within a laser machining region R1. The laser machining region R1 is a region surrounded by the frame 110A and the frame 110B. The frame 110A and the frame 110B are plate-shaped main frames upstanding in the Z direction and extending in the X direction. The frame 110A and the frame 110B are connected to each other by a lower frame 110C and support the head driver 140. The lower frame 110C is provided below the machining region R1 and supports the table 120. The frame 110A includes an opening 110AO through which the workpiece W being transported by the transporter 200 can pass.

The table 120 is a member that supports the workpiece W in the machining region R1. The table 120 has a rectangular base plate 121 and a plurality of supporting plates 122. The plurality of supporting plates 122 are arranged in a line along the X direction while upstanding on an upper face of the base plate 121. On the upper end part of each supporting plate 122 there are formed a plurality of protrusions 122A. The table 120 supports the lower face of the workpiece W on the upper ends of the protrusions 122A. The protrusions 122A are each, for example, of a sawtooth shape and are all formed to have the same height from the base plate 121.

The laser head 130 is a device that irradiates the workpiece W on the table 120 with a laser beam to perform laser machining, under the control of the controller 400. For example, the laser head 130 can perform boring machining by irradiating a laser beam along the outline of a hole to be formed in the workpiece W on the table 120.

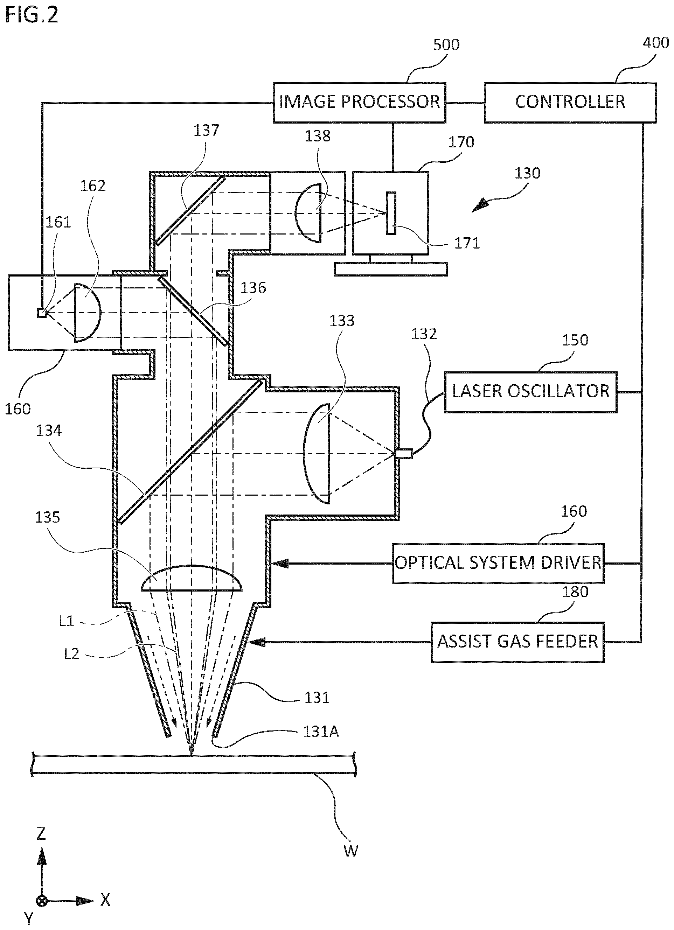

Fig. 2 is a diagram showing an example of a configuration of the laser head 130. The laser head 130 includes a nozzle 131, an optical fiber 132, a collimator 133, a beam splitter 134, and a condenser lens 135.

The laser head 130 irradiates the workpiece W with a machining laser beam L1 and an illumination laser beam L2 from an emission opening 131A of the nozzle 131. The laser head 130 is provided so as to be movable relative to the workpiece W in the X direction, the Y direction, and the Z direction. The laser head 130 performs cutting machining by irradiating the machining laser beam L1 along a cutting line to be formed in the workpiece W while moving relative to the workpiece W.

The optical fiber 132 is connected to a laser oscillator 150 and introduces the machining laser beam output from the laser oscillator 150 to the laser head 130.

The collimator 133 is provided so that the incident side focal point of the machining laser beam L1 coincides with the position of an end part of the optical fiber 132 and converts the machining laser beam L1 output from the laser oscillator 150 into a parallel beam.

The beam splitter 134 is provided at an incidence position of the machining laser beam L1 passing through the collimator 133, reflects the machining laser beam L1, and transmits the illumination laser beam L2.

The condenser lens 135 is provided at an incidence position of the machining laser beam L1 reflected by the beam splitter 134 and focuses the machining laser beam L1 incident thereon. The optical system driver 160 adjusts the focal point on the workpiece W side by causing the condenser lens 135 to move along an optical axis.

An illumination unit 160 is connected to the laser head 130 in an attachable/detachable manner. The illumination unit 160 includes a laser array 161 and a collimator 162. The laser array 161 emits the illumination laser beam L2 having a wavelength different from that of the machining laser beam L1. The collimator 162 is provided at an incidence position of the illumination laser beam L2 from the laser array 161 and converts the illumination laser beam L2 incident from the laser array 161 into a parallel beam.

The laser head 130 includes a half mirror 136. The half mirror 136 is provided at an incidence position of the illumination laser beam L2 passing through the collimator 162, and partially reflects and partially transmits the illumination laser beam L2.

The illumination laser beam L2 reflected by the half mirror 136 passes through the beam splitter 134. The condenser lens 135 focuses the illumination laser beam L2 passing through the beam splitter 134. The region on the workpiece W irradiated with the illumination laser beam L2 is set so as to include the region on the workpiece W irradiated with the machining laser beam L1.

The laser head 130 is provided with an imager 170. The imager 170 is a device that captures an image of the region irradiated with the machining laser beam L1. The imager 170 includes an imaging element 171. The imaging element 171 is an image sensor that detects return light of the illumination of the illumination laser beam L2 that is reflected and scattered by the workpiece W and generates image data.

The return light from the workpiece W passes through the condenser lens 135 and becomes incident on the beam splitter 134. The return light includes light of the illumination laser beam L2 reflected and scattered by the workpiece W and light of the machining laser beam L1 reflected by the workpiece W. The light originating from the illumination laser beam L2 passes through the beam splitter 134 and becomes incident on the half mirror 136. On the other hand, the light originating from the machining laser beam L1 is reflected by the beam splitter 134.

In the case where molten metal of the workpiece W is deposited on a cut surface of the workpiece W or the like, return light includes light within the infrared to near-infrared wavelength range emitted from the molten metal. The light originating from the molten metal passes through the beam splitter 134 and becomes incident on the half mirror 136.

The laser head 130 includes a wavelength selection filter 137 and an imaging lens 138. The wavelength selection filter 137 is, for example, a dichroic mirror, a notch filter, or the like. The return light that has been made incident on the half mirror 136 passes through the half mirror 136 and becomes incident on the wavelength selection filter 137. The light originating from the illumination laser beam L2 is reflected by the wavelength selection filter 137 and becomes incident on the imaging lens 138. On the other hand, the light originating from the machining laser beam L1 is transmitted through the wavelength selection filter 137. The imaging lens 138 focuses the light reflected by the wavelength selection filter 137 onto the imaging element 171.

The laser machining tool 1 includes an image processor 500. The image processor 500 is communicably connected to the imager 170 and the controller 400. The imager 170 transmits image data generated by the imaging element 171 to the image processor 500. Upon receiving the image data transmitted from the imager 170, the image processor 500 performs image processing on the image data and generates data related to a machining state. As the data related to a machining state, the image processor 500 generates, for example, data that indicates a kerf width. A kerf width can be calculated, for example, by detecting edges at both ends of a kerf produced by laser machining and converting the distance between the edges on the image into the distance on the actual scale. Upon generating the data related to a machining state, the image processor 500 transmits this data to the controller 400.

To the laser head 130 there is connected an assist gas feeder 180. The assist gas feeder 180 is a device that feeds an assist gas into the nozzle 131. The assist gas is used in laser machining to remove molten material.

Returning to the description of Fig. 1, the laser head 130 is provided on the head driver 140 and can be moved in the X direction, the Y direction, and the Z direction by the head driver 140. The head driver 140 includes a gantry 140A, a slider 140B, and an elevator 140C.

The gantry 140A is provided above the frame 110A and the frame 110B and along the Y direction. The head driver 140 includes a driving mechanism such as a ball screw that moves the gantry 140A in the X direction. The gantry 140A can be moved in the X direction by this driving mechanism. On the upper face of the gantry 140A there is provided along the Y direction a guide 140AG that guides the slider 140B.

The slider 140B is provided spanning from the upper face to the -X side face of the gantry 140A. The head driver 140 includes a driving mechanism such as a ball screw that moves the slider 140B in the Y direction. The slider 140B can be moved in the Y direction by this driving mechanism. On the -X side face of the slider 140B there is provided along the Z direction a guide 140BG that guides the elevator 140C.

The elevator 140C is provided on the -X side face of the slider 140B. The head driver 140 includes a driving mechanism such as a ball screw that moves the elevator 140C in the Z direction. The elevator 140C can be moved in the Z direction by this driving mechanism.

The laser head 130 is held below the elevator 140C. The laser head 130 can move in the X direction above the laser machining region R1 as the gantry 140A moves in the X direction. The laser head 130 can also move in the X direction above the laser machining region R1 as the slider 140B moves in the Y direction. The laser head 130 can also move in the Z direction above the laser machining region R1 as the elevator 140C moves in the Z direction.

The transporter 200 is a device that transports the workpiece W that has undergone laser machining performed by the laser machining device 100. The transporter 200 includes a carriage 210, a plate 220, and a plurality of workpiece holders 230.

The carriage 210 is provided so as to be movable in the Y direction. The plate 220 is provided on the +Y side face of the carriage 210. The plurality of workpiece holders 230 are provided at intervals along the X direction while each sticking out of the +Y side face of the plate 220. The workpiece holders 230 can hold an end part of the workpiece W by pinching it.

The secondary machining device 300 is a device that performs secondary machining and processing of forcing out slag on the workpiece W within a secondary machining region R2. The secondary machining region R2 is a region having a slag discharge space ES outside and below the table 120 as seen in a plan view.

The secondary machining device 300 includes a frame 310, a secondary machining part 320, and a force-out part 330.

The frame 310 includes a vertical frame 310A and a horizontal frame 310B. The vertical frame 310A is a plate-shaped member upstanding in the Z direction and extending in the X direction. The vertical frame 310A is formed from a sheet of metal member, and its plate quality, plate thickness, and so forth are set so as to have sufficient strength for performing secondary machining on the workpiece W and forcing slag out. The vertical frame 310A supports each part of the secondary machining device 300. In the vertical frame 310A there is provided an opening 310AO through which the workpiece W being transported by the transporter 200 can pass. The horizontal frame 310B is a plate-shaped member provided on the -Y side of the vertical frame 310A and extending in the X direction. The horizontal frame 310B supports and suspends the secondary machining part 320 and the force-out part 330.

The secondary machining part 320 is a device that performs secondary machining on the workpiece W. The secondary machining part 320 is suspended from a guide provided along the X direction on the lower face of the horizontal frame 310B and is movable in the X direction along the guide. The secondary machining part 320 includes a secondary machining tool 321 for performing secondary machining on the workpiece W. The secondary machining tool 321 is, for example, a tool for performing tapping machining to cut an internal thread in a cut surface of a hole formed in the workpiece W by means of boring machining. When performing tapping machining on a hole in the workpiece W, the secondary machining part 320 brings the secondary machining tool 321 into contact with the cut surface of the hole in the workpiece W and spins it. The secondary machining part 320 is capable of performing tapping machining on a hole of which slag has been forced out by the force-out part 330.

Here, boring machining is a machining process in which, in the state where the table 120 having the plurality of protrusions 122A supports the workpiece W thereon, the laser head 130 irradiates a laser beam along the outline of a hole to be formed in the workpiece W. Slag usually falls off the workpiece W to be removed. However, in some cases, slag, which is supposed to fall off, may be obstructed and kept from falling off by the protrusion 122A, and may get caught in the hole and not fall off. Also, in those cases where a cutting defect occurs, slag, which is supposed to fall off, may become adherent to the workpiece W and not fall off. The force-out part 330 is a device that forces out slag that remains in a hole formed in the workpiece W by means of boring machining.

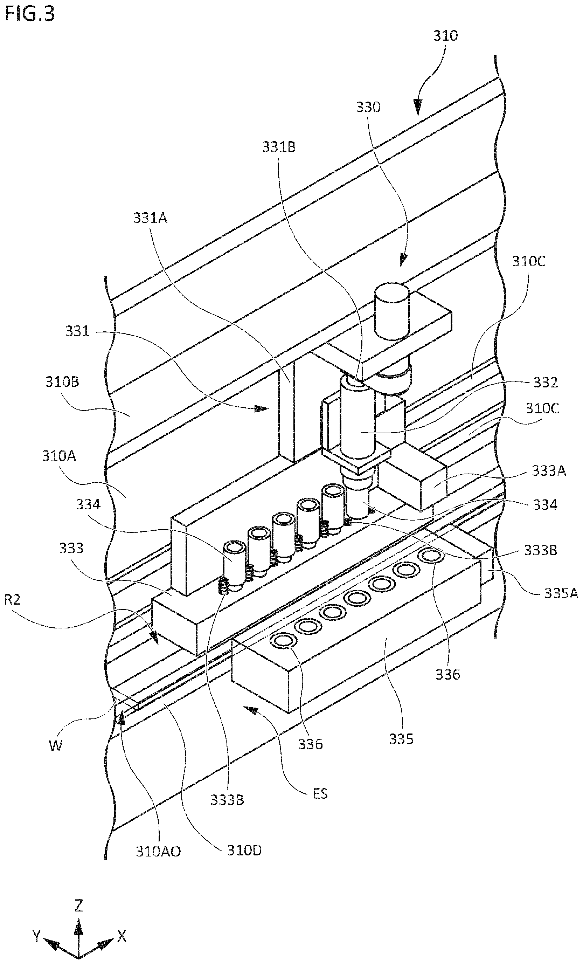

Fig. 3 is a diagram showing an example of an external perspective view of the force-out part 330. The force-out part 330 includes a striker supporting body 331, a striker 332, a tool supporting body 333, a plurality of rod-shaped tools 334, an annular member supporting body 335, and a plurality of annular members 336.

The striker supporting body 331 includes a frame 331A and an elevation driver 331B. The frame 331A supports the elevation driver 331B. The frame 331A is suspended from a guide provided along the X direction on the lower face of the horizontal frame 310B and is movable in the X direction along the guide. The elevation driver 331B raises or lowers the striker 332 by driving force of a driving device such as an electric motor.

The striker 332 drives the rod-shaped tool 334 by descending. The striker 332 is formed in a cylindrical shape and is driven by the elevation driver 331B to ascend or descend. The lower end part of the striker 332 is formed so as to correspond to the shape of the upper end part of the rod-shaped tool 334. The process of forcing out slag is performed by lowering the striker 332 to lower the rod-shaped tool 334.

The tool supporting body 333 is provided at a position sandwiching the workpiece W with the annular member supporting body 335 and supports the plurality of rod-shaped tools 334 along the X direction. The plurality of rod-shaped tools 334 are each a tool for forcing out slag that remains in a hole. The plurality of rod-shaped tools 334 are each formed in a rod shape and each have a different diameter.

The tool supporting body 333 includes a driver 333A and a plurality of elastic members 333B. The tool supporting body 333 is supported by a guide 310C provided on a wall surface of the vertical frame 310A and is movable in the X direction along the guide 310C by being driven by the driver 333A. The tool supporting body 333 supports the rod-shaped tool 334 so that the lower end part of the rod-shaped tool 334 sticks out downward when the rod-shaped tool 334 is lowered by the striker 332. The plurality of elastic members 333B are provided corresponding respectively to the plurality of rod-shaped tools 334, and elastically support the rod-shaped tools 334. The elastic member 333B compresses when the striker 332 descends, and an elastic force developed when the striker 332 ascends raises the rod-shaped tool 334 to its original pre-descending position.

The annular member supporting body 335 is provided at a position sandwiching the workpiece W with the tool supporting body 333 and supports the plurality of annular members 336 provided along the X direction. The plurality of annular members 336 are each a member into which the rod-shaped tool 334 being driven and lowered by the striker 332 can be inserted. The plurality of annular members 336 are each formed in a hollow cylindrical shape and each have a different diameter.

The annular member supporting body 335 includes a driver 335A. The annular member supporting body 335 is supported by a guide 310D provided on a wall surface of the vertical frame 310A and is movable in the X direction along the guide 310D by being driven by the driver 335A. The annular member supporting body 335 supports the annular member 336 so that when slag remaining in a hole of the workpiece W is forced out by the rod-shaped tool 334, the slag that has been forced out falls below the annular member supporting body 335.

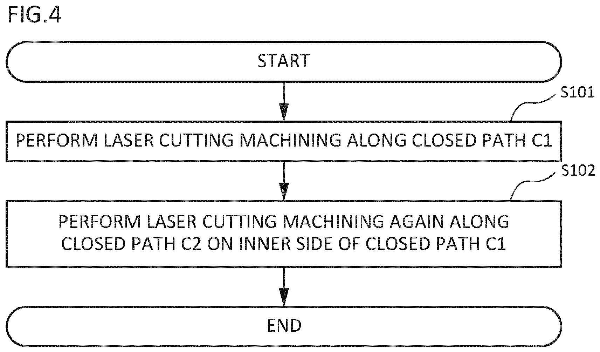

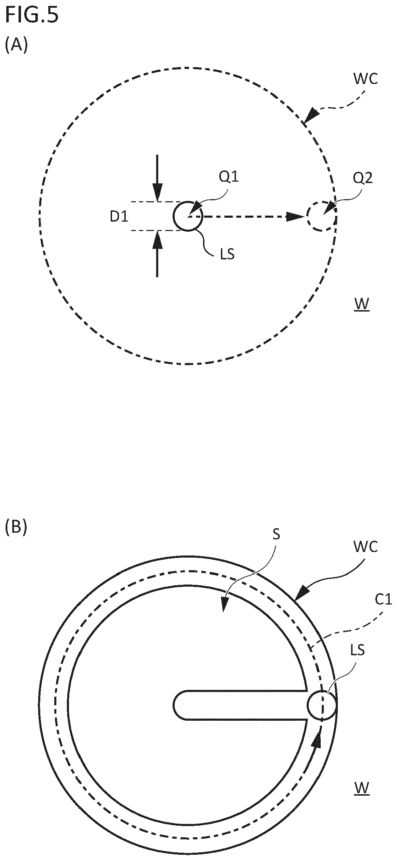

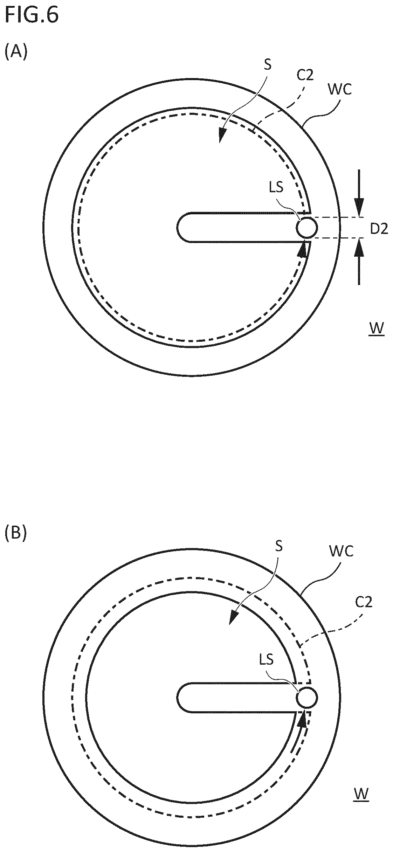

Fig. 4 is a flowchart showing an example of a procedure for controlling boring machining. Fig. 5 and Fig. 6 are diagrams showing an example of the procedure for the boring machining. The following description will describe the procedure for the boring machining performed by the laser machining device 100.

As shown in Fig. 5, the controller 400 controls the operation of the laser machining device 100 so as to perform cutting machining by irradiating a laser beam along a closed path C1 (Step S101).

In Step S101, as shown in Fig. 5 (A), the controller 400 causes the nozzle 131 of the laser head 130 to face a center position Q1 of an outline WC of a hole to be formed in the workpiece W, and then causes the nozzle 131 to irradiate a laser beam. A spot LS of the laser beam is formed with a diameter D1 on the upper face of the workpiece W. Then, the controller 400 causes the laser head 130 to move to a position Q2 at which the spot LS of the laser beam is tangent to the outline WC of the hole to be formed in the workpiece W.

As shown in Fig. 5 (B), the controller 400 causes the laser head 130 to move so that the center of the spot LS moves along the predetermined closed path C1. As the center of the spot LS moves along the closed path C1, the spot LS moves so as to be tangent to the outline WC of the hole to be formed in the workpiece W. The portion of the workpiece W irradiated with the laser beam melts, and when the spot LS has made a full circle along the closed path C1, slag S separates from the workpiece W. As a result, a hole is formed in the workpiece W along the closed path C1, which is the trajectory of the spot LS.

Slag S usually falls off the workpiece W to be removed. However, as described above, in some cases, slag S, which is supposed to fall off, may be obstructed and kept from falling off by the protrusion 122A, and may get caught in the hole and not fall off. Also, in those cases where a cutting defect occurs, slag S, which is supposed to fall off, may become adherent to the workpiece W and not fall off.

Accordingly, as shown in Fig. 6, the controller 400 controls the operation of the laser machining device 100 so as to perform cutting machining by irradiating the laser beam along a closed path C2 on the inner side of the closed path C1 (Step S102).

In Step S102, as shown in Fig. 6 (A), the controller 400 changes the diameter of the spot LS to a diameter D2, which is smaller than the diameter D1. Then, as shown in Fig. 6 (B), the controller 400 causes the laser head 130 to move so that the center of the spot LS of the laser beam moves along the closed path C2. As the center of the spot LS moves along the closed path C2, the laser beam is irradiated along the periphery of the slag S. By irradiating the laser beam along the periphery of the slag S, even if the slag S is caught in the hole, the laser beam is also irradiated to the portion where the slag S is in contact with the workpiece W. Also, by irradiating the laser beam along the periphery of the slag S, even if the slag S is adhered to the workpiece W, the laser beam is also irradiated to the portion where the slag S is adhered to the workpiece W. As a result, more reliably, the slag falls off the workpiece W to be removed.

Now, the workpiece W in a state where slag S still has not fallen off can cause defective machining, damage to a mold, and damage to a tap when forming or tapping a hole. Thus, taking into consideration a possibility that slag S has not fallen off, the controller 400 executes a process for forcing out slag S that may still possibly remain in the hole, before performing shape forming or tapping the hole.

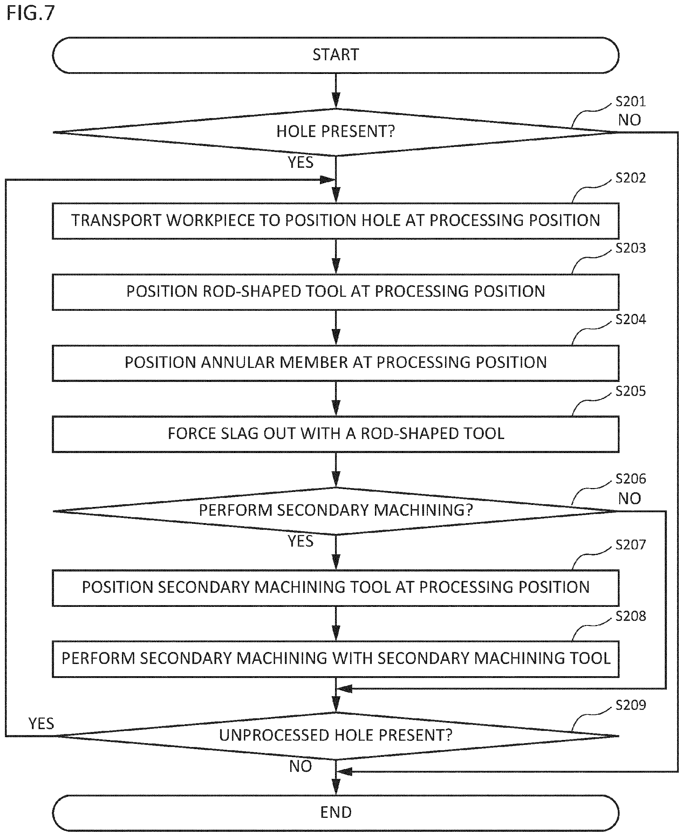

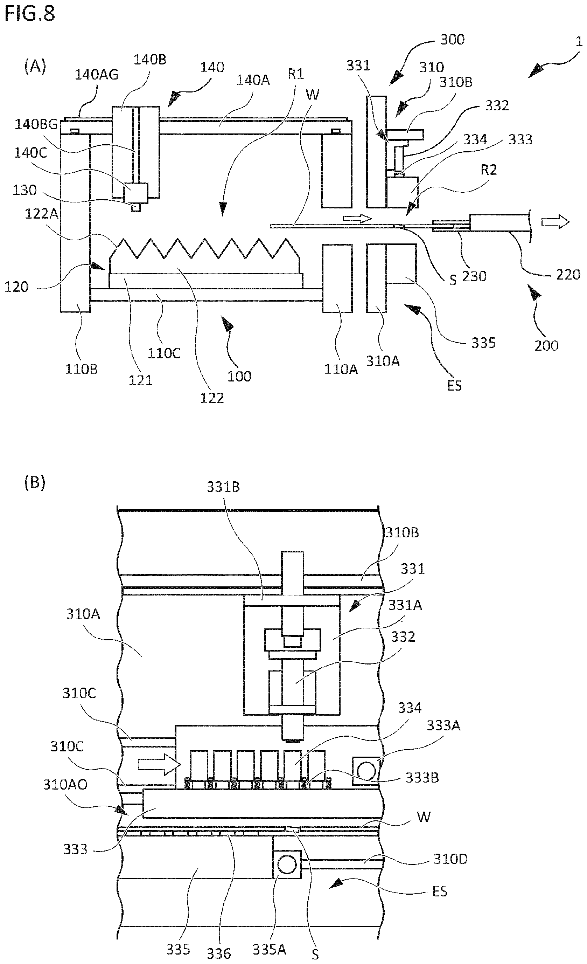

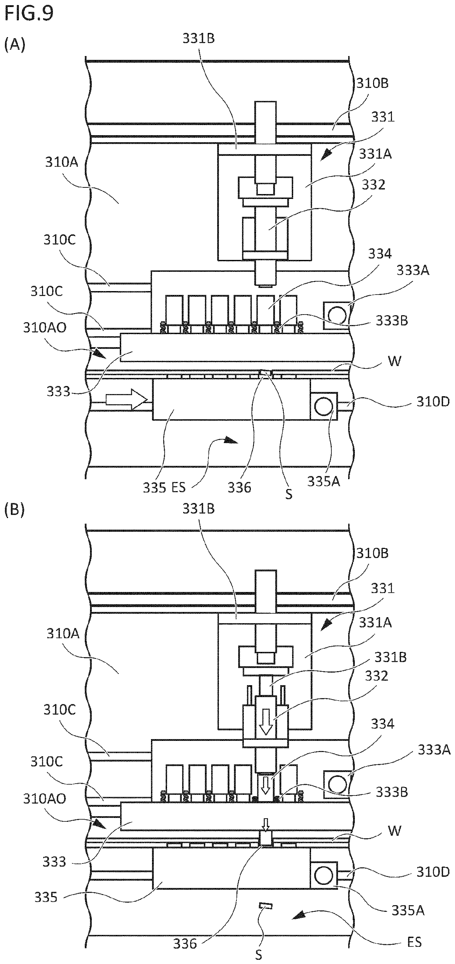

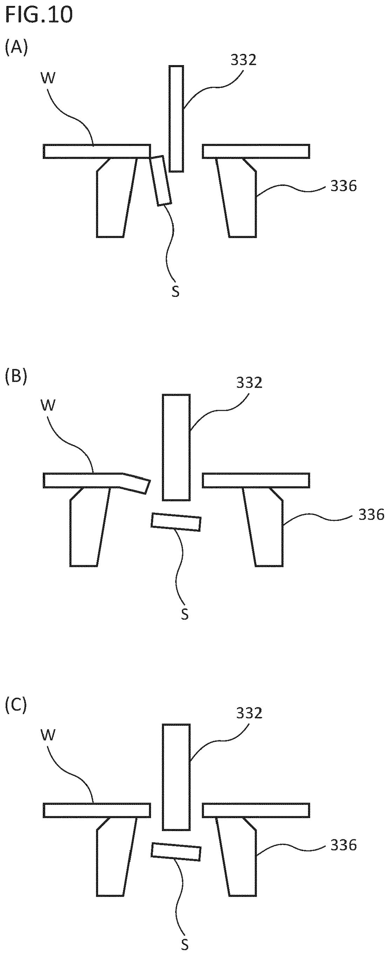

Fig. 7 is a flowchart showing an example of the procedure for controlling the process of forcing out slag S and secondary machining. Fig. 8 and Fig. 9 are diagrams showing an example of the procedure for forcing out slag S. Fig. 10 is a reference diagram for describing the diameter of the rod-shaped tool 334 and the diameter of the annular member 336 suitable for forcing out slag S. The following description will describe the procedure for performing the process of forcing out slag S and secondary machining, for all of the holes formed in the workpiece W.

After the laser machining device 100 ends the laser machining, the controller 400 determines whether or not a hole is present in the workpiece W (Step S101). For example, if a laser machining program includes a boring machining program for forming a hole, the controller 400 determines that a hole is present in the workpiece W.

If it is determined that no hole is present in the workpiece W (Step S201; NO), the controller 400 ends the processing shown in Fig. 7.

If it is determined that a hole is present in the workpiece W (Step S201; YES), the controller 400 causes the transporter 200 to transport the workpiece W so that the hole is arranged at a processing position where slag S is to be forced out (Step S202). In a case where a plurality of holes are present in the workpiece W, the controller 400 causes the transporter 200 to transport the workpiece W so that one of the plurality of holes is arranged at the processing position. Upon executing the processing of Step S202, the transport device 200 transports the workpiece W so that the hole is arranged at a predetermined processing position in the secondary machining region R2, as shown in Fig. 8(A).

The controller 400 then causes the secondary machining device 300 to move the tool supporting body 333 so that the rod-shaped tool 334 used for forcing out slag S is positioned at the processing position (Step S203). For example, the controller 400 causes the secondary machining device 300 to move the secondary machining part 320 so as to shift the secondary machining tool 321 to a position where it does not cause interference when slag S is being forced out. Then, from the plurality of rod-shaped tools 334 each having a different diameter, the controller 400 selects the rod-shaped tool 334 to be used for forcing out slag S to suit the diameter of the hole. The rod-shaped tool 334 used for forcing out slag S must have a diameter smaller than the diameter of the hole. However, if the diameter of the rod-shaped tool 334 is excessively small for the diameter of the hole, the force of the rod-shaped tool 334 to force out slag S may be insufficient. When the rod-shaped tool 334 has insufficient force to force out slag S, as shown in Fig. 10 (A), slag S that has been adhered to the workpiece W may still stay adhered to the workpiece W and not be forced out. Thus, from the rod-shaped tools 334 of diameters smaller than that of the hole, the controller 400 selects the rod-shaped tool 334 of the largest diameter as the rod-shaped tool 334 to be used for forcing out slag S. The controller 400 then causes the secondary machining device 300 to move the tool supporting body 333 so that the selected rod-shaped tool 334 is positioned at the processing position. As the processing of Step S203 is executed, the secondary machining device 300 causes the tool supporting body 333 to move so that the selected rod-shaped tool 334 is arranged directly above the hole arranged at the processing position, as shown in Fig. 8 (B).

The controller 400 then causes the secondary machining device 300 to move the annular member supporting body 335 so that the annular member 336 to be used for forcing out slag S is positioned at the processing position (Step S204). For example, from the plurality of annular members 336 each having a different diameter, the controller 400 selects the annular member 336 to be used for forcing out slag S, to suit the diameter of the hole. The annular member 336 used for forcing out slag S must have a diameter larger than the diameter of the hole. However, if the diameter of the annular member 336 is excessively large for the diameter of the hole, the force to support the workpiece W around the hole may become insufficient. When the force to support the workpiece W around the hole is insufficient, as shown in Fig. 10 (B), the workpiece W around the hole may become unable to bear the force of the rod-shaped tool 334 forcing out slag S and become deformed. Thus, from the annular members 336 of diameters larger than that of the hole, the controller 400 selects the annular member 336 of the smallest diameter as the annular member 336 to be used for forcing out slag S. The controller 400 then causes the secondary machining device 300 to move the annular member supporting body 335 so that the selected annular member 336 is positioned at the processing position. As the processing of Step S204 is executed, the secondary machining device 300 causes the annular member supporting body 335 to move so that the selected annular member 336 is arranged directly below the hole arranged at the processing position, as shown in Fig. 9 (A) .

Then, the controller 400 causes the secondary machining device 300 to lower the striker 332 so that the rod-shaped tool 334 forces out the slag S that may still possibly remain in the hole (Step S205). As the processing of Step S205 is executed, the secondary machining device 300 causes the striker 332 to move to a position directly above the rod-shaped member 334 to be used for forcing out the slag S. Then, as shown in Fig. 9 (B), the secondary machining device 300 causes the striker 332 to descend and the rod-shaped tool 334 to drive, thereby forcing out the slag S by means of the rod-shaped tool 334. When using the rod-shaped tool 334 of a diameter appropriate for the diameter of the hole, the rod-shaped tool 334 reliably forces out slag S adhered to the workpiece W as shown in Fig. 10 (C). When using the annular member 336 of a diameter appropriate for the diameter of the hole, the workpiece W around the hole does not deform, as shown in Fig. 10 (C).

Then, the controller 400 determines whether or not to perform secondary machining on the hole of which the slag S has just been forced out (Step S206). For example, if a secondary machining program includes a program for performing secondary machining on a hole of which slag S has been forced out, the controller 400 determines to perform secondary machining.

If it is determined to perform secondary machining (Step S206; YES), the controller 400 causes the secondary machining device 300 to move the secondary machining part 320 so that the secondary machining tool 321 is positioned at the processing position (Step S207). For example, the controller 400 causes the secondary machining device 300 to move the tool supporting body 333 so as to shift the rod-shaped tool 334 to a position where it does not cause interference when secondary machining is being performed. The controller 400 also causes the secondary machining device 300 to move the annular member supporting body 335 so as to shift the annular member 336 to a position where it does not cause interference when secondary machining is being performed. The controller 400 then causes the secondary machining device 300 to move the secondary machining part 320 so that the secondary machining tool 321 is positioned at the processing position. As the processing of Step S207 is executed, the secondary machining device 300 causes the secondary machining part 320 to move so that the secondary machining tool 321 is arranged directly above the hole arranged at the processing position.

Then, the controller 400 causes the secondary machining device 300 to drive the secondary machining part 320 so as to perform secondary machining on the hole (Step S208). As the processing of Step S208 is executed, the secondary machining device 300 performs secondary machining such as tapping by means of the secondary machining tool 321 of the secondary machining part 320.

If it is determined in Step S206 not to perform secondary machining (Step S206; NO), or after having executed the processing of Step S208, the controller 400 determines whether or not an unprocessed hole is present (Step S209). For example, if the laser machining program includes the boring machining program for forming a hole, the controller 400 determines that an unprocessed hole is present in addition to holes of which slag S has already been forced out.

If it is determined that an unprocessed hole is present (Step S209; YES), the controller 400 causes the transporter 200 to transport the workpiece W so that the unprocessed hole is arranged at the processing position where slag S is to be forced out (Step S202).

The controller 400 repeatedly executes the processing from Step S202 to Step S209 until it is determined in Step S209 that no unprocessed hole is present. As a result, the controller 400 executes the operation of forcing out slag S by means of the rod-shaped tool 334, for all of the holes formed in the workpiece W.

If it is determined that no unprocessed hole is present (Step S209; NO), the controller 400 ends the processing shown in Fig. 7.

As described above, the laser machining tool 1 is a device that performs laser machining on the plate-shaped workpiece W. The laser machining tool 1 includes the table 120 that has the plurality of protrusions 122A and that supports the workpiece W on upper ends of the protrusions 122A. The laser machining tool 1 also includes the laser head 130 that performs boring machining by irradiating a laser beam along the outline WC of a hole to be formed in the workpiece W on the table 120. The laser machining tool also includes the transporter 200 that transports the workpiece W that has undergone laser machining. The laser machining tool 1 also includes the rod-shaped tool 334 that forces out slag S remaining in a hole. The laser machining tool 1 transports the workpiece W by means of the transporter 200 until the hole formed by boring machining is arranged at the processing position having a discharge space ES for the slag S outside and below the table 120 as seen in a plan view. The laser machining tool 1 forces out slag S remaining in a hole by means of the rod-shaped tool 334, at the processing position. According to this configuration, the laser machining tool 1 is capable of reliably forcing out slag S that remains in a hole without damaging the protrusions 122A of the table.

The laser machining tool 1 includes the secondary machining tool 321 that performs secondary machining on a hole of which slag S has been forced out by the rod-shaped tool 334. According to this configuration, the laser machining tool 1 can perform secondary machining on a hole of which slag S has been forced out.

The laser machining tool 1 selects either one of the rod-shaped tool 334 and the secondary machining tool 321 and positions it at the processing position. According to this configuration, the laser machining tool 1 can force out slag S without being interfered by the secondary machining tool 321 and perform secondary machining without being interfered by the rod-shaped tool 334.

The laser machining tool 1 includes the annular member 336 which is arranged so as to sandwich a workpiece W with the rod-shaped tool 334 and into which the rod-shaped tool 334 can be inserted. In the laser machining tool 1, a plurality of pairs of one unit of the rod-shaped tool 334 and one unit of the annular member 336 are arranged, and one of the pairs is selected for use, according to the size of the hole. According to this configuration, the laser machining tool 1 can suitably force out slag S remaining in a plurality of types of holes of different sizes.

The laser machining tool 1 includes the controller 400 that controls operations of the rod-shaped tool 334. The controller 400 executes the operation of forcing out slag S by means of the rod-shaped tool 334, for all of the holes formed in the workpiece W. According to this configuration, the laser machining tool 1 can reliably force out slag remaining in a hole.

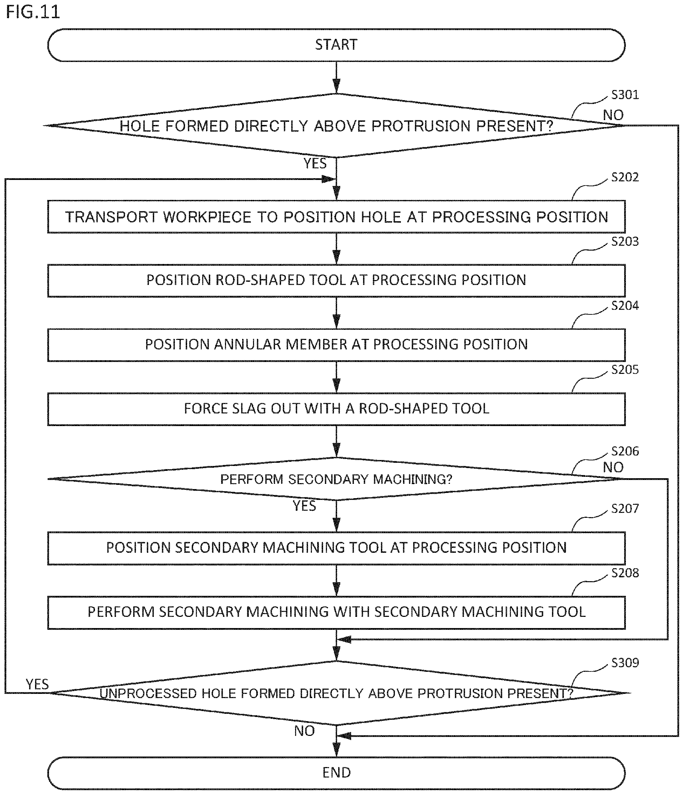

Fig. 11 is a flowchart showing another example of the procedure for controlling the process of forcing out slag S and secondary machining. The following description will describe the procedure for performing the process of forcing out slag S and secondary machining, for a hole formed directly above the protrusion 122A of the table 120 among the holes formed in the workpiece W. In the flowchart shown in Fig. 11, processes similar to those in the flowchart shown in Fig. 7 are assigned with the same reference signs as those in the flowchart shown in Fig. 7. In the following description, description will be omitted for the processes assigned with the same reference signs as those in the flowchart shown in Fig. 7.

After the laser machining device 100 ends laser machining, the controller 400 determines whether or not a hole formed directly above the protrusion 122A of the table 120 is present (Step S301). For example, the controller 400 determines whether or not the laser machining program includes the boring machining program for forming a hole at a coordinate location directly above the protrusion 122A. If the laser machining program includes the boring machining program for forming a hole at a coordinate location directly above the protrusion 122A, the controller 400 determines that a hole formed directly above the protrusion 122A is present.

If it is determined that no hole that is formed directly above the protrusion 122A is present (Step S301; NO), the controller 400 ends the processing shown in Fig. 11.

If it is determined that a hole that is formed directly above the protrusion 122A is present (Step S301; YES), the controller 400 executes the processing from Step S202 to Step S208.

If it is determined in Step S206 not to perform secondary machining (Step S206; NO), or after having executed the processing of Step S208, the controller 400 determines whether or not an unprocessed hole that is formed directly above the protrusion 122A is present (Step S309). For example, the controller 400 determines whether or not the laser machining program includes the boring machining program for forming a hole at a coordinate location directly above the protrusion 122A in addition to holes of which slag S has already been forced out. If the laser machining program includes the boring machining program for forming another hole at a coordinate location directly above the protrusion 122A, the controller 400 determines that an unprocessed hole formed directly above the protrusion 122A is present.

The controller 400 repeatedly executes the processing from Step S202 to Step S309 until it is determined in Step S309 that no unprocessed hole is present. As a result, the controller 400 causes the operation of forcing out slag S by means of the rod-shaped tool 334 to be executed, for the hole in the workpiece W that is formed directly above the protrusion 122A.

If it is determined that no unprocessed hole is present (Step S309; NO), the controller 400 ends the processing shown in Fig. 11.

As described above, the laser machining tool 1 includes the controller 400 that controls operations of the rod-shaped tool 334. The controller 400 causes the operation of forcing out slag S by means of the rod-shaped tool 334 to be executed, for the hole in the workpiece W that is formed directly above the protrusion 122A. According to this configuration, the laser machining tool 1 can reduce the amount of time taken to perform the operation of forcing out slag S.

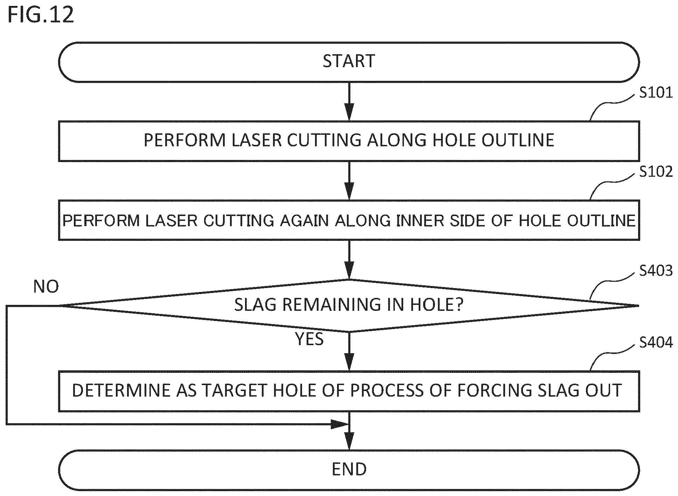

Fig. 12 is a flowchart showing another example of the procedure for controlling boring machining. In the flowchart shown in Fig. 12, processes similar to those in the flowchart shown in Fig. 4 are assigned with the same reference signs as those in the flowchart shown in Fig. 4. In the following description, description will be omitted for the processes assigned with the same reference signs as those in the flowchart shown in Fig. 4.

After having executed the processing of Step S102, the controller 400 determines whether or not slag S still remains in a hole formed by means of boring machining (Step S403). As described above, the imager 170 transmits to the image processor 500 image data generated by capturing an image of the region irradiated with the machining laser beam L1. Upon receiving the image data transmitted from the imager 170, the image processor 500 performs image processing on the image data and generates data related to a machining state. As the data related to a machining state, the image processor 500 generates, for example, data that indicates a kerf width, and transmits this data to the controller 400. Here, the kerf width at the end position of boring machining is not supposed to be calculated because the slag S side edge of the kerf width cannot be detected if boring machining has already been performed and slag S has fallen off. Thus, the controller 400 makes a reference, for example, to data indicating the kerf width, and if the kerf width at the end position of boring machining has been calculated, it is determined that slag S still remains in the hole formed by the boring machining.

If it is determined that no slag S remains in the hole (Step S403; NO), the controller 400 ends the processing shown in Fig. 12.

If it is determined that slag S still remains in the hole (Step S403; YES), the controller 400 sets the hole formed by the boring machining as a target of the process of forcing out slag S (Step S404), and ends the processing shown in Fig. 12.

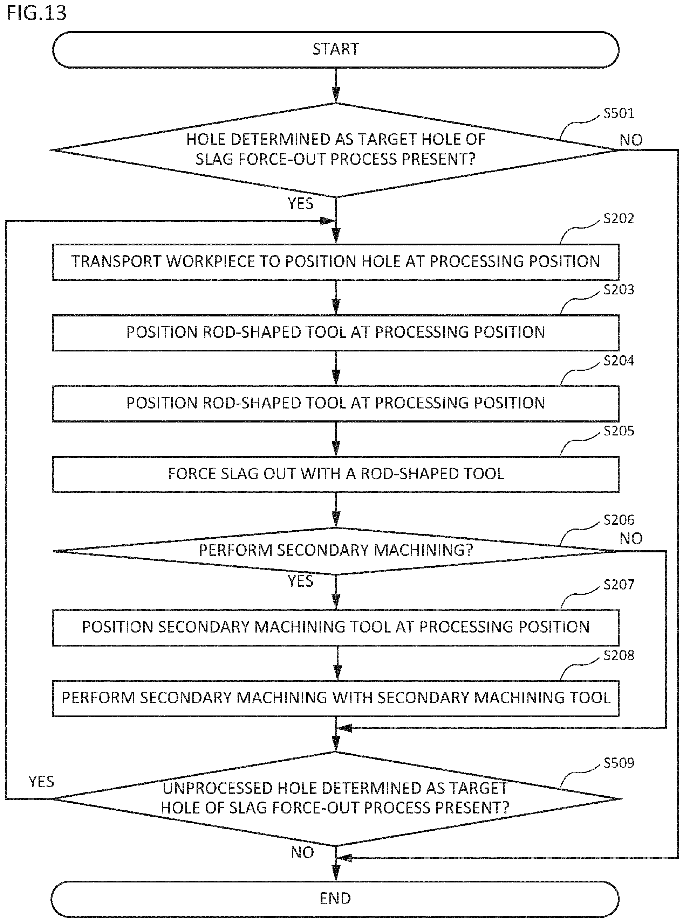

Fig. 13 is a flowchart showing another example of the procedure for controlling the process of forcing out slag S and secondary machining. The following description will describe the procedure for performing the process of forcing out slag S and secondary machining, for a hole determined as having slag S remaining therein. In the flowchart shown in Fig. 13, processes similar to those in the flowchart shown in Fig. 7 are assigned with the same reference signs as those in the flowchart shown in Fig. 7. In the following description, description will be omitted for the processes assigned with the same reference signs as those in the flowchart shown in Fig. 7.

After the laser machining device 100 ends laser machining, the controller 400 determines in Step S404 of Fig. 12 whether or not a hole set as a target of the process of forcing out slag S is present (Step S501).

If it is determined that no hole set as a target of the process of forcing out slag S is present (Step S501; NO), the controller 400 ends the processing shown in Fig. 13.

If it is determined that a hole set as a target of the process of forcing out slag S is present (Step S501; YES), the controller 400 executes the processing from Step S202 to Step S208.

If it is determined in Step S206 not to perform secondary machining (Step S206; NO), or after having executed the processing of Step S208, the controller 400 determines whether or not a hole set as a target of the process of forcing slag S out is present (Step S509).

The controller 400 repeatedly executes the processing from Step S202 to Step S509 until it is determined in Step S509 that no unprocessed hole is present. As a result, the controller 400 causes the operation of forcing out slag S by means of the rod-shaped tool 334 to be executed for the hole determined as having slag S remaining therein.

If it is determined that no unprocessed hole is present (Step S509; NO), the controller 400 ends the processing shown in Fig. 13.

As described above, the laser machining tool 1 includes the controller 400 that controls operations of the rod-shaped tool 334. The laser machining tool 1 includes the imager 170 that captures an image of a hole formed by means of boring machining. The controller 400 then determines from the image captured by the imager 170 whether or not slag S still remains in the hole. Then, if it is determined that slag S remains in the hole, the controller 400 causes the operation of forcing out the slag S by means of the rod-shaped tool 334 to be executed for the hole. According to this configuration, the laser machining tool 1 can not only reliably force out slag remaining in a hole but also reduce the amount of time taken to perform the operation of forcing out slag.

The present invention has been described using the above embodiment. However, the technical scope of the invention is not limited to the description of the above embodiment. It is apparent to those skilled in the art that various modifications or improvements can be added to the above embodiment. It is also apparent from the scope of claims that the present invention also encompasses one or more of such modifications or improvements. The contents of Japanese Patent Application No. 2020-107510 and all documents cited in the detailed description of the present invention are incorporated herein by reference to the extent permitted by law.

When a reference is made to the execution order of the processes such as operations, procedures, and steps in the apparatus, the system, the program, and the method shown in the claims, specification, and drawings, wording such as "before" or "prior to" is not explicitly used. Also, it should be noted that the processes may be executed in any order unless an output of a particular process is used by the following process. In the claims, specification and drawings, a flow of operations may be described by using the terms such as "first" and "next" for the sake of convenience. This, however, does not necessarily mean that the operations should be performed in the described order.

### Description of Reference Signs

1: Laser machining tool
120: Table
122A: Protrusion
130: Laser head
170: Imager
200: Transporter
334: Rod-shaped tool
336: Annular member
321: Secondary machining tool
400: Controller
ES: Discharge space
S: Slag
W: Workpiece
WC: Contour

## Claims

1. A laser machining tool that performs laser machining on a plate-shaped workpiece, comprising:
a table that has a plurality of protrusions and that supports the workpiece on upper ends of the protrusions;
a laser head that performs boring machining by irradiating a laser beam along an outline of a hole to be formed in the workpiece on the table;
a transporter that transports the workpiece that has undergone laser machining; and
a rod-shaped tool that forces out slag remaining in the hole,
wherein the workpiece is transported by means of the transporter until the hole formed by the boring machining is arranged at a processing position having a discharge space for the slag, outside and below the table as seen in a plan view, and
wherein the slag remaining in the hole is forced out by means of the rod-shaped tool, at the processing position.

2. The laser machining tool according to claim 1, comprising
a secondary machining tool that performs secondary machining on the hole of which the slag has been forced out by the rod-shaped tool.

3. The laser machining tool according to claim 2,
wherein either one of the rod-shaped tool and the secondary machining tool is selected and is positioned at the processing position.

4. The laser machining tool according to any one of claims 1 to 3, comprising
an annular member which is arranged so as to sandwich the workpiece with the rod-shaped tool and into which the rod-shaped tool can be inserted,
wherein a plurality of pairs of one unit of the rod-shaped tool and one unit of the annular member are arranged, and one of the pairs is selected for use, according to the size of the hole.

5. The laser machining tool according to any one of claims 1 to 4, comprising
a controller that controls operations of the rod-shaped tool,
wherein the controller causes an operation of forcing out the slag by means of the rod-shaped tool to be executed, for all of the holes formed in the workpiece.

6. The laser machining tool according to any one of claims 1 to 4, comprising
a controller that controls operations of the rod-shaped tool,
wherein the controller causes an operation of forcing out the slag by means of the rod-shaped tool to be executed, for the hole in the workpiece that is formed directly above the protrusion.

7. The laser machining tool according to any one of claims 1 to 4, comprising
a controller that controls operations of the rod-shaped tool, and
an imager that captures an image of the hole formed by the boring machining,
wherein the controller determines from an image captured by the imager whether or not the slag remains in the hole and causes an operation of forcing out the slag by means of the rod-shaped tool to be executed for the hole if the slag is determined as remaining in the hole.

8. A workpiece machining method for machining a plate-shaped workpiece by means of laser machining, the method comprising:
supporting the workpiece on upper ends of a plurality of protrusions provided on a table;
performing boring machining by irradiating a laser beam along an outline of a hole to be formed in the workpiece on the table;
transporting the workpiece by means of a transporter until the hole formed by the boring machining is arranged at a processing position having a discharge space for slag, outside and below the table as seen in a plan view, and
forcing out the slag remaining in the hole by means of the rod-shaped tool, at the processing position.
